# EUROPÄISCHE PATENTSCHRIFT

(11) **EP 0 834 442 B1**
(45) Veröffentlichungstag und Bekanntmachung des Hinweises auf die Patenterteilung: **12.12.2001**
(21) Anmeldenummer: 97116402.5
(22) Anmeldetag: 19.09.1997
(51) Int. Cl.: B62D 25/24

(54) **Verschlusselement aus Kunststoff**
Synthetic stopper element
Elément de fermeture plastique

(30) Priorität: 02.10.1996 DE 19640835
(43) Veröffentlichungstag der Anmeldung: 08.04.1998
(73) Patentinhaber: TRW Automotive Electronics & Components GmbH & Co. KG, 78315 Radolfzell (DE)
(72) Erfinder: Bockenheimer, Alexander, 51491 Overrath (DE)
(74) Vertreter: Schieschke, Klaus, Dipl.-Ing.

(56) Entgegenhaltungen:
- EP-A- 0 733 558
- DE-A- 3 142 850
- DE-A- 4 304 080
- US-A- 4 901 395

## Beschreibung

Die Erfindung bezieht sich auf ein Verschlusselement aus Kunststoff, insbesondere zum Verschließen mindestens einer Öffnung in mindestens einem Träger, insbesondere einer Kraftfahrzeugkarosserie, nach dem Oberbegriff des Anspruchs 1.

Als Stand der Technik ist bereits ein gattungsbildendes Verschlusselement bekannt (EP 0 733 558 A1), bei welchem mindestens ein Bereich des Verschlusselements aus einem unter Wärmeeinwirkung expandierenden Material besteht, wobei ein Grundkörper und ein Abschnitt des Verschlusselements einstückig aus einem thermoplastischen Material geformt sind, welches bei erhöhter Wärmeeinwirkung unter Kleben mit der Öffnung und deren Umfangsbereich mediendicht verbindbar ist.

Bei dieser bekannten Konstruktion wird ein Ring bundförmig um eine Ausnehmung eines Teils gelegt Wird dieses nunmehr einstöckige Verschlusselement in eine Trägeröffnung eingesetzt und einer Wärmeeinwirkung unterzogen, so schmilzt das Material des Ringes und bildet im oberen und im unteren Bereich Klebeflansche. Hierbei ist es erforderlich, dass der Träger eine zylindrische Öffnung besitzt, da sonst eine einwandfreie Halte- und Dichtwirkung nicht mehr gewährleistet ist.

Bei einer weiteren bekannten Konstruktion eines Verschlusselements (DE 4 018 425 A1) ist mindestens ein Hohlraum vorgesehen. Dieser Hohlraum ist mit einem Medium gefüllt, welches nach der Montage des Verschlussdeckels in einer Trägeröffnung unter Temperatureinwirkung expandiert und damit Bereiche des Verschlussdeckels gegen benachbarte Bereiche der Trägeröffhung drückt. Hierdurch soll ein Abschluss der Trägeröffnung hergestellt werden.

Weiterhin sind Verschlussdeckel bekannt, welche aus Kunststoff bestehen und oberseitig sowie unterseitig jeweils eine Dichtlippe besitzen, die die benachbarten Flächen im Bereich einer Trägeröffnung beaufschlagen (DE-OS 3512582, DE-OS 3011448, GB-PS 1354973).

Bei allen derartigen bekannten Verschlussdeckeln besteht der Nachteil eines unbeabsichtigten Lösens aus der Trägeröffnung, so dass stets durch zusätzliche Einrichtungen dafür Sorge getragen werden muss, den entsprechenden Verschlussdeckel unlösbar innerhalb einer Trägeröffnung zu befestigen.

Dem gegenüber besteht die Aufgabe der vorliegenden Erfindung darin, ein Verschlusselement der eingangs genannten Art zu schaffen, welches auch in der Lage ist, zwei hintereinander angeordnete Öffnungen mit verschiedenen Durchmessern effektiv und mit guter Abdichtung zu verschießen.

Diese Aufgabe wird mit den Merkmalen im kennzeichnenden Teil des Anspruchs 1 gelöst. Es ergibt sich damit ein Verschlusselement, welches auch Träger mit verschiedenen Öffnungen mediendicht verschließt, d. h. eine gute Abdichtung gegen Wasser und/oder Öl bewirkt.

Vorteilhafte Weiterbildungen ergeben sich aus den Unteransprüchen.

Die Erfindung wird nachfolgend an Hand eines in der Zeichnung dargestellten Beispiels näher beschrieben. In der Zeichnung zeigen:
Fig. 1 eine Ausführungsmöglichkeit des Verschlußelements in zweiteiliger Form in Seitenansicht im Anlieferzustand;
Fig. 2 das Verschlußelement nach Fig. 2 in der Einbausituation vor dem Aufschmelzen, geschnitten;
Fig. 3 das Verschlußelement nach Fig. 1 und 2 nach dem Aufschmelzen in geschnittener Form in Seitenansicht.

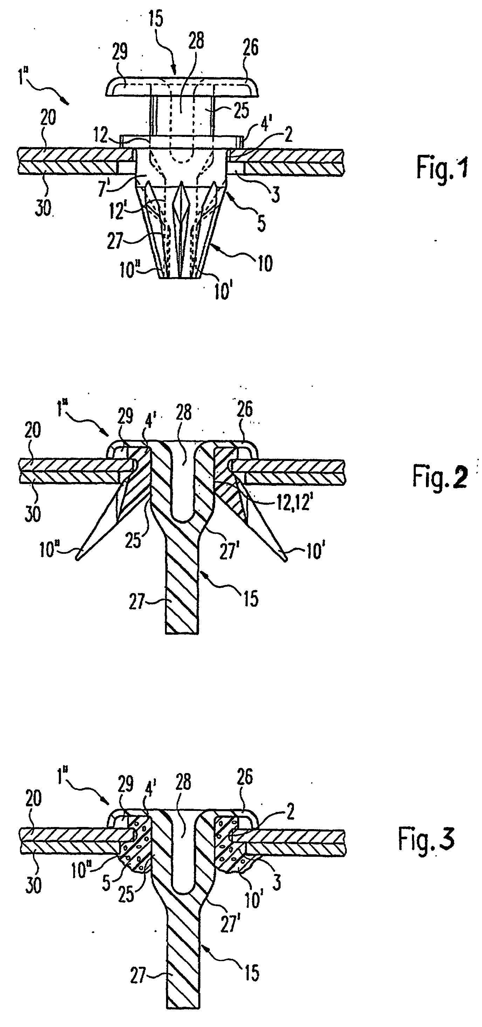

Nach Fig. 1 bis 3 ist ein Verschlußelement 1'' in zweistückiger Form gestaltet: Hier weist ein Grundkörper 5 einen eine Trägeröffnung 2 bzw. 3 überragenden Spreizbereich 10 auf, an welchen sich ein die jeweilige Trägeröffnung durchsetzender zylinderförmiger Bereich 7' anschließt. Der Spreizbereich 10 kann nach Fig. 1 und 2 aus mehreren Spreizarmen 10' und 10" bestehen.

Darüber hinaus besitzt der Grundkörper 5 zwei hintereinander angeordnete Öffnungen 12 und 12' verschiedenen Durchmessers. Die Öffnung 12' kleineren Durchmessers liegt im Bereich der Spreizarme 10' und 10".

Das Verschlußelement 1" weist ein Spreizelement 15 auf, welches nach Fig. 2 aus einem Abdeckflansch 26, einem Zylinderbereich 25 und einem Lagerbereich 27 besteht. In dem Zylinderbereich 25 kann sich eine napfförmige Aussparung 28 befinden.

In der in Fig. 1 dargestellten Form, welche den Anlieferungszustand darstellt, lagert der Lagerbereich 27 in der Öffnung 12' kleineren Durchmessers des Grundkörpers 5. Der Zylinderbereich 25 befindet sich oberhalb des Flansches 4'.

In diesem Anlieferungszustand läßt sich das zweiteilige Verschlußelement 1'' so in die beiden Öffnungen 2 und 3 verschiedenen Durchmessers der beiden Träger 20 und 30 einsetzen, daß der zylinderförmige Bereich 7' des Grundkörpers 5 die beiden Öffnungen 2 und 3 durchsetzt, wobei dann der Flansch 4' auf der Oberseite des Trägers 20 aufliegt.

Nunmehr wird nach Fig. 2 das Spreizelement 15 so in die beiden Öffnungen 12 und 12' des Grundkörpers 5 hineingedrückt, daß sich der Spreizbereich 10 öffnet und die Spreizarme 10 und 10' eine gespreizte Lage einnehmen. Dieses Eindrücken wird durch einen Konusbereich 27' zwischen dem Zylinderbereich 25 und dem Lagerbereich 27 erleichtert. In dieser Position durchsetzt der Zylinderbereich 25 die Öffnungen 12 und 12' des Grundkörpers.

Damit ist die Einbausituation nach Fig. 2 hergestellt. In dieser Einbausituation überdeckt der Abdeckflansch 26 des Spreizelements 15, welcher unterseitig einen Freiraum 29 aufweist, den Flansch 4'. Nunmehr erfolgt Einwirkung von Wärme, wodurch das Material des Grundkörpers 5 z.B. unter Bläschenbildung und Kleben eine Verformung erfährt und die Öffnungen 2 und 3 gemäß Fig. 3 einwandfrei abschließt.

Es ergibt sich damit ein mediendichter Verschluß der beiden Öffnungen 2 und 3, wobei außerdem infolge des Abdeckflansches 26 des Spreizelements 15 eine optisch vorteilhafte Wirkung erzielt wird.

Die Gestaltung der Spreizarme 10' und 10'' kann in beliebiger Weise sein, wobei jedoch jeweils sichergestellt werden muß, daß mit Hilfe des Spreizelements 15 diese Spreizarme aus der in Fig. 1 dargestellten angelieferten Position in die Einbauposition nach Fig. 2 überführbar sind, in welcher ein Spreizen hinter dem Träger 30 oder 20 stattfindet.

Mit Hilfe des erfindungsgemäßen Verschlußelements. 1'' können auf einfache Weise auch Öffnungen unterschiedlichen Durchmessers mediendicht verschlossen werden, wobei es keine Rolle spielt, ob die obere Öffnung 2 einen kleineren Durchmesser als die untere Öffnung 3 in der jeweiligen Trägeröffnung besitzt oder umgekehrt.

## Patentansprüche

1. Verschlußelement aus Kunststoff, insbesondere zum Verschließen mindestens einer Öffnung in mindestens einem Träger, insbesondere einer Kraftfahrzeugkarosserie, mit einem oberhalb des Trägers befindlichen Flansch und einem sich durch den Träger erstreckenden Grundkörper, wobei mindestens ein Bereich des Verschlußelements aus einem unter Temperatureinwirkung expandierenden Material besteht, wobei der Grundkörper (5) und der Flansch (4') des Verschlußelements (1") einstückig aus einem thermoplastischen Material geformt sind, welches bei erhöhter Wärmeeinwirkung unter Kleben mit der Öffnung (2, 3) und deren Umfangsbereich des Trägers (20, 30) mediendicht verbindbar ist,
**dadurch gekennzeichnet,**
**dass** der Grundkörper (5) einen die Trägeröffnung (2, 3) überragenden Spreizbereich (10) aufweist, an welchem sich ein die Trägeröffnung (2, 3) durchsetzender zylinderförmiger Bereich (7') anschließt und
**dass** der Flansch (4') und der Grundkörper (5) ein in mindestens einer Öffnung (12, 12') bewegbares Spreizelement (15) lagert, welches in Montagestellung den Spreizbereich (10) öffnet und den Flansch (4") überdeckt.

2. Verschlußelement nach Anspruch 1,
**dadurch gekennzeichnet,**
**daß** der Spreizbereich (10) aus mehreren Spreizarmen (10', 10") besteht, welche über einen Zylinderbereich (25) des Spreizelements (15) in eine gespreizte Lage bewegbar sind.

3. Verschlußelement nach Anspruch 1 und 2,
**dadurch gekennzeichnet,**
**daß** das Spreizelement (15) oberhalb des Zylinderbereichs (25) einen Abdeckflansch (26) und unterhalb einen Lagerbereich (27) aufweist.

4. Verschlußelement nach Anspruch 1 bis 3,
**dadurch gekennzeichnet,**
**daß** der Grundkörper (5) mindestens zwei hintereinander angeordnete Öffnungen (12,12') verschiedenen Durchmessers aufweist, wobei die Öffnung (12') kleineren Durchmessers im Bereich der Spreizarme (10', 10") liegt und auf den Durchmesser des Lagerbereichs (27) abgestellt ist.

5. Verschlußelement nach Anspruch 3,
**dadurch gekennzeichnet,**
**daß** der Abdeckflansch (26) unterseitig einen Freiraum (29) zur Aufnahme des Flansches (4') in montierter Position aufweist.

6. Verschlußelement nach Anspruch 1 bis 3,
**dadurch gekennzeichnet,**
**daß** der Zylinderbereich (25) des Spreizelements (15) eine Ausnehmung (28) aufweist.

7. Verschlußelement nach Anspruch 1 bis 6,
**dadurch gekennzeichnet,**
**daß** zwischen dem Zylinderbereich (25) und dem Lagerbereich (27) ein Konusbereich (27') liegt.

8. Verschlußelement nach einem der vorhergehenden Ansprüche 1 bis 7,
**dadurch gekennzeichnet,**
**daß** das Spreizelement (15) aus einem auch bei hoher Wärmeeinwirkung beständigen Kunststoffmaterial besteht.

## Claims

1. Plastic closure element, in particular for closing at least one opening in at least one support, in particular a motor-vehicle body, having a flange situated above the support and a base body extending through the support, at least one region of the closure element consisting of a material which expands under the effect of temperature, the base body (5) and the flange (4') of the closure element (1'') being formed integrally from a thermoplastic material which, when subjected to an increased heat effect, can be connected by bonding in a media-tight manner to the opening (2, 3) and the circumferential region thereof on the support (20, 30), **characterized in that** the base body (5) has an expanding region (10), which projects over the support opening (2, 3) and which is adjoined by a cylindrical region (7') passing through the support opening (2, 3), and **in that** the flange (4') and the base body (5) support an expanding element (15) which can be moved in at least one opening (12, 12') and, in the installation position, opens the expanding region (10) and covers the flange (4').

2. Closure element according to Claim 1, **characterized in that** the expanding region (10) comprises a plurality of expanding arms (10', 10'') which can be moved over a cylinder region (25) of the expanding element (15) into an expanded position.

3. Closure element according to Claims 1 and 2, **characterized in that** the expanding element (15) has a covering flange (26) above the cylinder region (25) and a bearing region (27) below it.

4. Closure element according to Claims 1 to 3, **characterized in that** the base body (5) has at least two openings (12, 12') which are arranged one behind the other and differ in diameter, the opening (12') of smaller diameter lying in the region of the expanding arms (10', 10'') and being matched to the diameter of the bearing region (27').

5. Closure element according to Claim 3, **characterized in that** the covering flange (26) has, on its lower side, a clearance (29) for receiving the flange (4') in the fitted position.

6. Closure element according to Claims 1 to 3, **characterized in that** the cylinder region (25) of the expanding element (15) has a recess (28).

7. Closure element according to Claims 1 to 6, **characterized in that** a cone region (27') lies between the cylinder region (25) and the bearing region (27).

8. Closure element according to one of the preceding Claims 1 to 7, **characterized in that** the expanding element (15) consists of a plastic material which is stable even when subjected to a high heat effect.

## Revendications

1. Elément de fermeture en matière plastique, notamment pour la fermeture d'au moins une ouverture dans au moins un support, notamment une carrosserie de véhicule automobile, comportant une bride située au-dessus du support et un corps de base qui s'étend à travers le support, et dans lequel au moins une partie de l'élément de fermeture est constituée par un matériau qui se dilate sous l'action de la chaleur, le corps de base (5) et la bride (4') de l'élément de fermeture (1") sont réalisés d'un seul tenant en une matière thermoplastique, qui, dans le cas d'une action accrue de la chaleur, peut être relié, d'une manière étanche vis-à-vis des fluides, par collage à l'ouverture (2, 3) et à sa partie périphérique sur le support (20, 30),
**caractérisé en ce**
**que** le corps de base (5) possède une partie d'écartement (10), qui fait saillie au-delà de l'ouverture de support (2, 3) et à laquelle se raccorde une partie (7') de forme cylindrique, qui traverse l'ouverture (2, 3) du support, et que la bride (4') et le corps de base (5) supportent un élément d'écartement (15), qui est déplaçable dans au moins une ouverture (12, 12') et qui, dans la position de montage, ouvre la partie d'écartement (10) et recouvre la bride (4').

2. Elément de fermeture selon la revendication 1, **caractérisé en ce que** la partie d'écartement (10) se compose de plusieurs bras d'écartement (10', 10"), qui sont déplaçables pour amenés dans une position écartés, par l'intermédiaire d'une partie cylindrique (25) de l'élément d'écartement (15).

3. Elément de fermeture selon les revendications 1 et 2, **caractérisé en ce que** l'élément d'écartement (15) possède, au-dessus de la partie cylindrique (25), une bride de recouvrement (26) et, au-dessous de la partie cylindrique, une partie de support (27).

4. Elément de fermeture selon les revendications 1 à 3, **caractérisé en ce que** le corps de base (5) comporte au moins deux ouvertures (12, 12') disposées l'une derrière l'autre et possédant des diamètres différents, l'ouverture (12') possédant le plus petit diamètre étant située dans la zone des bras d'écartement (10', 10") et étant réglée sur le diamètre de la partie de support (27).

5. Elément de fermeture selon la revendication 3, **caractérisé en ce que** la bride de revêtement (26) possède à sa partie inférieure, dans la position montée, un espace libre (29) servant à loger la bride (4').

6. Elément de fermeture selon les revendications 1 à 3, **caractérisé en ce que** la partie cylindrique (25) de l'élément d'écartement (15) possède un évidement (28).

7. Elément de fermeture selon les revendications 1 à 6, **caractérisé en ce qu'**une partie conique (27') est présente entre la partie cylindrique (25) et la partie de support (27).

8. Elément de fermeture selon l'une des revendications précédentes 1 à 7, **caractérisé en ce que** l'élément d'écartement (15) est constitué par une matière plastique qui résiste également à l'action d'une chaleur intense.
